Europäisches Patentamt

European Patent Office

Office européen des brevets

(19)

(11) Veröffentlichungsnummer: **0 060 459**
A2

(12) ## EUROPÄISCHE PATENTANMELDUNG

(21) Anmeldenummer: **82101726.6**

(51) Int. Cl.³: **F 16 D 7/02**

(22) Anmeldetag: **05.03.82**

(30) Priorität: **17.03.81 CH 1786/81**

(43) Veröffentlichungstag der Anmeldung: **22.09.82**
**Patentblatt 82/38**

(84) Benannte Vertragsstaaten: **AT DE FR GB IT**

(71) Anmelder: **Richard Haller AG, Ueberlandstrasse 240, CH-8600 Dübendorf (CH)**

(72) Erfinder: **Haller, Richard, Lerchenbergstrasse 74, CH-8703 Erlenbach ZH (CH)**

(74) Vertreter: **Rossel, Albert, Dipl.-Ing. ETH et al, Postfach, CH-8023 Zürich (CH)**

(54) **Ausrückbare Drehmomentkupplung.**

(57) Auf der Antriebswelle (1) ist eine Schraubenfeder (9) aufgewickelt, die das Drehmoment der Antriebswelle mit Reibschluß auf eine Hülse (5) der Abtriebswelle überträgt. Bei relativer Achsialverschiebung zwischen Antriebswelle (1) und Abtriebswelle (4) gelangt das abgewinkelte Ende (99) der Schraubenfeder in eine Ausweitung (59) des Hülsenschlitzes (50). Die Feder entspannt sich.

Zwischen zwei Windungen der Schraubenfeder befindet sich ein radial gerichteter Pilotstift (6), der in einer Ringnut (61) der Antriebswelle, gegen achsiale Verschiebung gesichert, und mit der Welle nicht automatisch mitdrehend, geführt ist. Dieser Stift übernimmt, an Stelle der bekannten Flankenführungen, die achsiale Führung der Feder, wobei nun aber die beiden äusseren Federwindungen eine beschränkte achsiale Bewegungsfreiheit aufweisen. Der Auskuppelvorgang wird in hohem Maße gefördert, so daß praktisch ein Freilauf mit kleinster Restreibung erreicht wird.

EP 0 060 459 A2

PATENTANWALTSBUREAU A. ROSSEL DIPL. ING. ETH. ZÜRICH

Mitglied des Verbandes schwelz. Patentanwälte (VSP)

Bank: Schwelz. Kreditanstalt    Postcheck    Telefon    Telegramme    Bureau    Briefadresse: Postfach
Filiale Unterstrass    80-4403    (01) 302 32 23    Patentrossel    Stampfenbachstr. 73    8023 Zürich, Schweiz

0060459

- 1 -

Richard Haller, Dübendorf

## Ausrückbare Drehmomentkupplung

Die Erfindung betrifft eine ausrückbare Drehmomentkupplung gemäss Oberbegriff des Patentanspruches 1.

Bei diesen Kupplungen sind die Schraubenfedern seitlich durch feste Flanken mit Spiel, achsial unverschiebbar, festgehalten. Die Hülse kann ein rohrförmiger, sich über das Ende der Antriebswelle erstreckender Teil einer angetriebenen Welle sein. Die achsiale Relativbewegung zwischen Schraubenfeder und Hülse wird durch bekannte Anordnungen, z.B. CH-PS 340 385, bei Ueberlast selbsttätig, entgegen der Kraft einer Feder, ausgelöst.

Die Uebertragung des Drehmomentes geschieht jeweils durch das abgewinkelte Federende, das die Feder dabei noch mehr auf dem zylindrischen Teil "aufwürgt" (klemmend bis zur Bruchgrenze). Bei der Relativbewegung Hülse/Feder gleitet das eine abgewinkelte Ende der Schraubenfeder entlang der einen Kante eines Schlitzes der Hülse und gelangt in eine seitliche Ausweitung dieser Kante, so dass sich die Schraubenfeder entspannt. Gleichzeitig kommt das andere Ende der Schraubenfeder zum Anliegen an diese Kante des Schlitzes, wodurch die Schraubenfeder weiter geöffnet wird. Die Antriebswelle dreht sich mit herabgesetzter Reibung zwischen Welle und Feder weiter. Diese Restreibung kann bei längerem Weiterlaufen der Kupplung zu einer unnötigen Erwärmung der Kupplungsteile, bis zu deren Zerstörung, führen.

Aufgabe der Erfindung ist das Erzielen einer nahezu vollständigen Auskupplung.

Erfindungsgemäss wird die Aufgabe bei der eingangs genannten Drehmomentkupplung durch die im kennzeichnenden Teil des Patentanspruches 1 enthaltenen Merkmale gelöst.

Die bekannten seitlichen Flankenführungen der Schraubenfedern, z.B. Seegerringe, werden demgemäss ersetzt durch mindestens einen, zwischen zwei Windungen der Schraubenfeder, radial angeordneten Pilotstift, der in einer Ringnut der Antriebswelle gegen achsiale Verschiebung gesichert und mit der Welle nicht mitdrehend, geführt ist. Dieser Pilot- oder achsiale Führungsstift für die Schraubenfeder ist vorzugsweise mittig der Schraubenfeder angeordnet. Er greift, vorzugsweise wie die beiden seitlichen, radial abgewinkelten Enden der Feder, in einen Achsialschlitz mit beiderends seitlichen Schlitzausweitungen, der die Schraubenfeder umgebenden, mit einer Abtriebswelle verbundenen Hülse ein. Bei Kraftübertragung durch die Schraubenfeder dreht der Pilotstift mit, da er vom Schlitz der Hülse mitgenommen wird. Bei Freilauf der Kupplung dreht sich der Pilotstift, wie auch die Schraubenfeder, nicht mit der Antriebswelle auf der sie sitzen. Die Halterung des Pilotstiftes gleitet in der Ringnut der Welle.

Durch den Pilotstift und die wegfallenden Flankenführungen sind die mittleren Windungen der Schraubenfeder achsial auf der Welle geführt, während die äusseren oder äussersten Schraubenfederwindungen in ihrer achsialen Bewegung frei sind. Diese Bewegungsfreiheit ist beschränkt durch die einer Schraubenfeder charakteristische, innere, achsiale Federkraft von Windung zu Windung. Diese innere, achsiale Federkraft ist für die Kraftübertragung der Kupplung vernachlässigbar, da die Kraftübertragung durch radiale Krafteinwirkung, d.h. Reibungskraft zwischen Schraubenfeder und Antriebswelle, erfolgt. Die genannte achsiale Bewegungsfreiheit der Aussenwindungen der Schraubenfeder ermöglicht beim Ausrücken der Kupplung ein ungehindertes Abgleiten des entsprechenden Federendes an der Ausweitung des Schlitzes, so dass eine maximale Lockerung der Klemm-

- 3 -    0060459

wirkung der Schraubenfeder herbeigeführt werden kann.

Weitere Merkmale der Neuerung sind aus den Patentansprüchen 2 - 8 und aus den anhand der Zeichnungen nachstehend erläuterten Ausführungsvarianten zu entnehmen. Es zeigen

Fig. 1 einen Längsschnitt durch eine erfindungsgemässe Drehmomentkupplung,

Fig. 2 eine Seitendraufsicht auf die eigentliche Kupplung,

Fig. 3 einen Detaillängsschnitt durch die aufgewundene Schraubenfeder im Bereich des Pilotstiftes, mit eingesetzter Klammer,

Fig. 4 eine Draufsicht auf das Detail gemäss Fig. 3, und

Fig. 5 einen Querschnitt durch die Kupplung im Bereich des Pilotstiftes, mit der Klammer.

Die Antriebswelle 1 ist im festen Lager 2 achsial unverschiebbar gelagert und reicht mit ihrem Ende 10 in den Innenbereich der topfartigen Hülse 5, welche ein Bestandteil der Abtriebswelle 4 ist. Diese ist im Lager 3 rotierbar gelagert, während das Lager 3 seinerseits entgegen den Kräften, vorzugsweise Federkräften $P_1$ und $P_2$, in den Führungen 30 achsial verschiebbar gehalten ist. Auf dem Gewindespindelteil 7 der Abtriebswelle 4 sitzt die fixierte Mutter 70, deren achsiale Bewegungsfreiheit, je nach Anwendungszweck der Kupplung, ganz eingeschränkt werden kann. Bei erhöhtem Drehmoment dreht sich die Spindel 7 im Gewinde der Mutter 70. Dies führt zu einer Achsialverschiebung der Hülse 5, entgegen den Kräften $P_1$ oder $P_2$.

Auf dem Nabenende 10 der Antriebswelle 1 ist eine Schraubenfeder 9 aufgewickelt, deren beide Enden 90 und 99 radial abgewinkelt sind und in den Längsschlitz 50 der Hülse 5 eingreifen. Beiderends weist dieser Schlitz je eine Ausweitung 55 bzw. 59 auf, die sich radial in entgegengesetzter Richtung erstreckt.

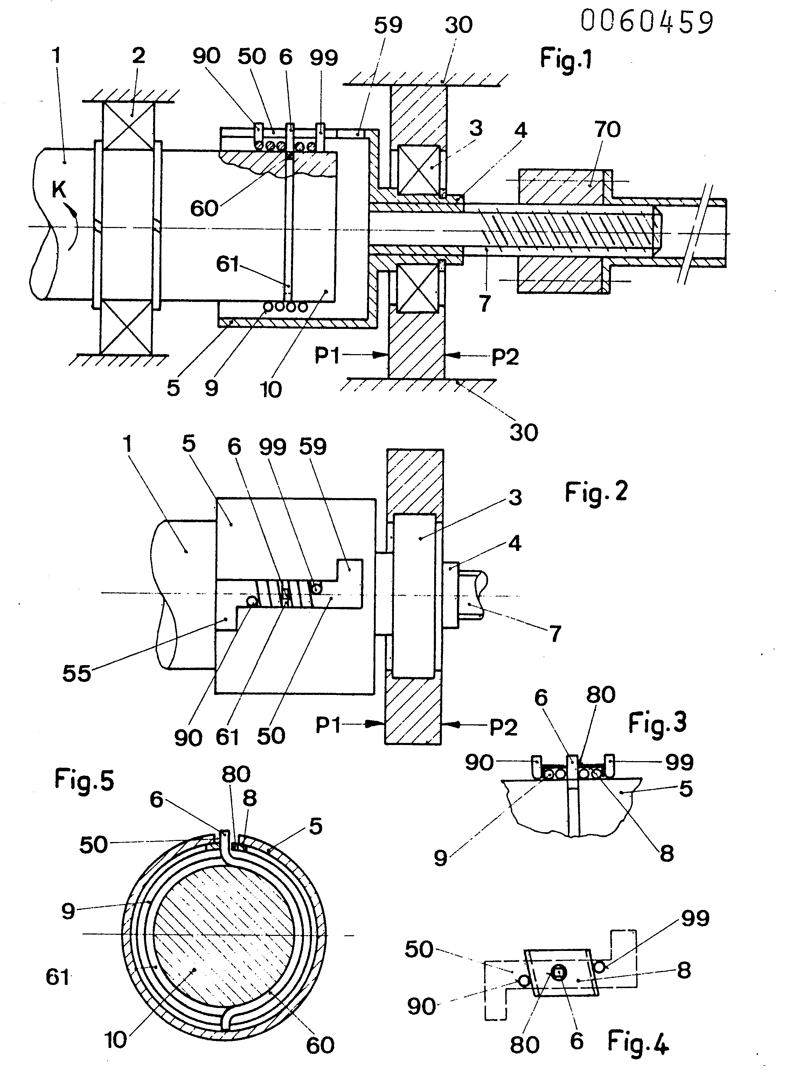

Im vorliegenden Beispiel weist die Schraubenfeder 9 fünf volle Windungen auf. In den Fig. 1 und 2 ist diese Schraubenfeder in der Grundstellung dargestellt, d.h. die Federenden 90, 99 liegen ausserhalb des Bereiches der Ausweitungen 55, 59. Durch Kraftschluss zwischen Schraubenfeder 9 und Ende 10 der Achse 1 wird die Rotationskraft K der Antriebswelle vom Federende 99 über die Kante des Schlitzes 50 auf die Hülse 5 und weiter auf die Abtriebswelle 4 übertragen. Das Anliegen des Federendes 99 auf die Schlitzkante fördert das Aufwickeln der Schraubenfeder 9 auf das Ende 10. Die Feder wird stärker auf die Welle gewürgt, d.h. der Kraftschluss wird verstärkt.

Wird bei dieser Kraftübertragung eine gewisse vorbestimmte Kraft überschritten - abhängig von den Kräften $P_1$ und $P_2$ - so verschiebt sich, von der Mutter 70 und der Spindel 7 ausgelöst, das Lager 3 mit der Hülse 5 nach links, bis das Federende 99 in die Ausweitung 59 hineinrutscht. Durch das gleichzeitige Anliegen des anderen Federendes 90 an der selben Kante des Schlitzes 50, welches Anliegen des Federendes ein Aufweiten der Schraubenfeder 9 auslöst, wird das Lösen, bzw. die Verminderung der Klemmwirkung, dieser Schraubenfeder 9 gefördert.

Es hat sich nun gezeigt, dass, sofern die Schraubenfeder zwischen zwei Flanken geführt ist, dieses Lösen teilweise nicht schnell genug und teilweise nicht vollständig erfolgt, so dass noch eine Restreibung verbleibt. Um dies zu verhindern, ist anstelle der Seitenflanken mittig der Schraubenfeder ein Pilotstift 6 angeordnet, der radial zwischen zwei Windungen vorsteht. Die Halterung dieses Stiftes ist als halbkreisförmig gebogener Draht 60 ausgebildet, der in einer Ringnut 61 des Wellenendes 10 versenkt ist, so dass die Schraubenwindungen diese Halterung kreuzen können. Bei der Relativbewegung zwischen Hülse 5 und Achse 1 hält der an der Welle gegen achsiale Verschiebung gesicherte Stift 6 die Schraubenfeder 9 zurück. Durch die weitere relative Achsialverschiebung der Hülse gegenüber der Antriebswelle bzw. der Feder, verschiebt sich das Federende entlang der Kante des Schlitzes, bis zum Abgleiten in die Ausweitung 59, so dass im vorberechneten Moment ein plötzliches und relativ vollständiges Lösen der Reibkraft zwischen Feder 9 und Achsende 10 erfolgt.

In jeder Phase des Kupplungsvorganges verhindert der Pilotstift 6 eine achsiale Verschiebung der Schraubenfeder 9 auf dem Ende 10 der Antriebswelle 1.

Wie bereits erwähnt, können sich beim Abgleiten der Federenden 90 bzw. 99 in eine der Ausweitungen 55 bzw. 59 des Schlitzes 50, nur die Aussenwindung oder die äussersten Windungen der Schraubenfeder 9 geringfügig in achsialer Richtung verschieben.

Es hat sich nun als vorteilhaft erwiesen, die inneren Windungen der Schraubenfeder über eine, in den Fig. 3 - 5 dargestellte Klammer 8 zusammenzuhalten, wobei die Klammer durch den Pilotstift 6 gegen jede achsiale Bewegung gesichert ist. Die Klammer besteht aus einem U-förmig gebogenen Blechstreifen, der im freien Ringraum zwischen der Schraubenfeder 9 und der Hülse 5 angeordnet ist und der breiter ist, als die Breite des Schlitzes, so dass die Klammer nicht an den Schlitzkanten anstehen kann. Der Blechstreifen weist eine zentrale Bohrung 80 für den Stift 6 auf, und erstreckt sich über die dem Stift benachbarten Windungen der Schraubenfeder, wodurch die Windungen jederzeit, an einander anliegend, verbleiben. Im vorliegenden Fall umfasst der Blechstreifen der Klammer 8 vier dem Pilotstift benachbarte Windungen und lässt je die beidseitig äusserste Windung frei.

Wird die erwähnte achsiale Relativverschiebung der Hülse 5 gegenüber der Antriebswelle 1 auf Grund der Kräfte

0060459

P$_1$ oder P$_2$ wieder rückgängig gemacht, d.h. Schraubenfeder und Hülse befinden sich in der neutralen Mittelstellung, so liegen die Federenden 99 und 90 wieder im Schlitz 50 und die Schraubenfeder kann das Drehmoment von der Antriebswelle 1 wieder auf die Hülse 5 und damit auf die Abtriebswelle 4 übertragen.

Die Halterung 60 des Pilotstiftes 6 kann, wie in Fig. 5 dargestellt, so ausgebildet sein, dass sie zwei diametral zueinander liegende Stifte 6 aufweist, die in benachbarte Windungszwischenräume einrasten.

An der Hülse kann eine Bremse, die die Restrotation derselben nach dem Auskuppeln zusätzlich abbremst, angeordnet sein.

Es sei noch auf die wesentlichsten Funktionsunterschiede zwischen den bekannten Drehmomentkupplungen mit relativ starren seitlichen Flankenführungen der Schraubenfeder, und der vorbeschriebenen erfindungsgemässen Drehmomentkupplung mit der Pilotstiftführung und freien seitlichen Schraubenwindungen eingegangen.

Bei der bekannten Drehmomentkupplung tritt beim Ausrückprozess, zum Stillstand der Uebertragung der Antriebskraft, eine Klemmung des abgewinkelten Federendes zwischen der Kante der Ausweitung und der seitlichen Flankenführung der Schraubenfeder ein. Diese Klemmung verhindert ein völliges Lösen der Kupplung. Der Freilauf wird praktisch nicht erreicht. Demgegenüber weist, bei achsialer Führung der Feder durch den Federstift, mindestens die äusserste Windung eine beschränkte, seitliche, achsiale Bewegungsfreiheit auf, so dass das abgewinkelte Federende, unter geringer Spreizung der äussersten Windung, frei auf der Kante der Ausweitung abgleitet und die Uebertragungskraft der Kupplung gelöst wird. Die achsiale Haltewirkung des Pilotstiftes auf die Schraubenfeder 5 kommt in dieser Situation des Freilaufes am meisten zur Wirkung. Ist die Feder frei von der Kraft-

0060459

übertragungskraft, besteht die Tendenz zum seitlichen Wandern auf dem Wellenende 10, was vom Pilotstift 6 verhindert wird.

Eine auch unter die Erfindungsansprüche fallende Umkehrvariante besteht darin, dass die Schraubenfeder unter Vorspannung im Innenhohlraum der Hülse satt eingewickelt ist und radial nach innen gerichtete Enden aufweist, die in einen entsprechenden Axialschlitz der Welle eingreifen, welcher Schlitz ebenfalls Endausweitungen für das Lösen der Schraubenfeder aufweist. Für die Uebertragung des Drehmomentes liegt die Schraubenfeder mit Klemmreibung am Innern der Hülse an.

Im Bereich der Windungen weist die Kupplung einen ebenfalls radial nach innen gerichteten, die Schraubenfeder durchdringenden Pilotstift auf, der gleit- aber axial nicht verschiebbar in der Hülse gehaltert ist. Diese Halterung des Pilotstiftes erfolgt vorzugsweise in einer Innenringnut der Hülse. Der Pilotstift dient der axialen Führung der Schraubenfeder. Diese Umkehranordnung der Feder, in der Hülse statt auf der Welle, ist speziell für schwere Kupplungen geeignet.

9481H

PATENTANWALTSBUREAU A. ROSSEL DIPL. ING. ETH. ZÜRICH

Mitglied des Verbandes schweiz. Patentanwälte (VSP)

0060459

Bank: Schwelz. Kreditanstalt
Filiale Unterstrass

Postcheck
80-4403

Telefon
(01) 362 32 23

Telegramme
Patentrossel

Bureau
Stampfenbachstr. 73

Briefadresse: Postfach
8023 Zürich, Schweiz

- 01 -

Richard Haller, Dübendorf

P a t e n t a n s p r ü c h e

1.    Ausrückbare Drehmomentkupplung mit einer mit Vorspannung auf einer Antriebswelle aufgewickelten Schraubenfeder, deren Drahtenden abgewinkelt sind, annähernd radial zur
Welle abstehen und in einen Längsschlitz einer um die Welle
angeordneten Hülse eingreifen, wobei bei Ueberlast eine axiale Relativbewegung zwischen Schraubenfeder und Hülse stattfindet, die eine Entspannung der Reibkraft dieser Schraubenfeder durch Freigabe ihres einen Endes, in einer Ausweitung
des Schlitzes, auslöst, dadurch gekennzeichnet, dass zwischen
zwei Windungen der Schraubenfeder (9) mindestens ein in achsialer Richtung nicht bewegbarer Pilot (6) angeordnet ist.

2.    Drehmomentkupplung nach Anspruch 1, dadurch gekennzeichnet, dass der Pilot aus einem in einer radialen Ringnut (61)
der Antriebswelle (1) gleitbar sitzenden, zwischen zwei Windungen der Schraubenfeder (9) hindurch in den Schlitz (50)
hineinragenden Stift (6) besteht.

3.    Drehmomentkupplung nach Anspruch 2, dadurch gekennzeichnet, dass der Stift (6) das abgewinkelte Ende eines in der
Ringnut (61) versenkt angeordneten Drahtbogens (60) ist.

4.    Drehmomentkupplung nach Anspruch 1 oder 2, dadurch gekennzeichnet, dass mehrere Pilotstifte (6), vorzugsweise
         nahe der je letzten Aussenwindungen der Schraubenfeder (9) angeordnet sind.

5.    Drehmomentkupplung nach einem der Ansprüche 3 - 4, dadurch gekennzeichnet, dass diametral zu jedem Stift (6) ein weiterer Stift angeordnet ist, der bei Ausführung gemäss Anspruch 3 das abgewinkelte andere Ende des Drahtbogens (60) ist, welcher weitere Stift in einer anderen Windungslücke als der erste Stift, vorzugsweise der nächstfolgenden, liegt.

6.   Drehmomentkupplung nach einem der Ansprüche 1 - 5, gekennzeichnet durch mindestens eine, vorzugsweise alle Windungen, mit Ausnahme der äussersten oder der zwei äussersten der Schraubenfeder (9) mindestens teilweise umgreifende Klammer (8), die mit dem Pilotstift (6) verbunden ist, und die ein Auseinanderspreizen einzelner Windungen verhindert.

7.   Drehmomentkupplung nach Anspruch 6, dadurch gekennzeichnet, dass die Klammer (8) aus einem abgewinkelten Blechstreifen, der zwischen Schraubenfeder (9) und Hülse (5) eingebettet ist, besteht, wobei der Pilotstift (6) der Feder in eine Ausnehmung (80), z.B. Loch der Klammer, eingreift.

8.   Drehmomentkupplung nach einem der Ansprüche 1 - 7, dadurch gekennzeichnet, dass an der Hülse eine Bremse angeordnet ist, die die Restrotation der Hülse nach dem Auskuppeln zusätzlich abbremst.

10381H

0060459

Fig.1

Fig. 2

Fig.3

Fig.5

Fig.4